# EUROPÄISCHE PATENTANMELDUNG

(11) **EP 0 638 835 A1**
(43) Veröffentlichungstag der Anmeldung: **15.02.1995**
(21) Anmeldenummer: 94905271.6
(22) Anmeldetag: 18.01.1994
(51) Int. Cl.: G02F 1/163, B60R 1/02, B60J 3/04, B60R 1/08

(54) **ELEKTRONIKSCHALTUNG ZUR AUTOMATISCHEN STEUERUNG EINES ELEKTROCHROMEN AUTOWAGEN-RUECKBLICKSPIEGELS**

(30) Priorität: 19.01.1993 RU 3279
(71) Anmelder: MOSKOVSKOE NAUCHNO-PROIZVODSTVENNOE OBIEDINENIE "NIOPIK", Moscow 103787 (RU)
(72) Erfinder: GAVRILOV, Vladimir Ivanovich, Dolgoprudny, 141700 (RU); KOSAREV, Sergei Petrovich, Dolgoprudny, 141700 (RU); SHELEPIN, Igor Viktorovich, Dolgoprudny, 141700 (RU)
(74) Vertreter: Patentanwälte Zellentin & Partner
(86) Internationale Anmeldenummer: RU9400004
(87) Internationale Veröffentlichungsnummer: WO9417443

(57) **Zusammenfassung**

Die Erfindung betrifft eine Schaltung zur automatischen Steuerung eines elektrochromen Auto-Rückspiegels, enthaltend ein System von Bildempfängern, eine Vergleichsschaltung, einen Verstärker und ein Speisemodul. Erfindungsgemäß ist das Speisemodul als ein Spannungsimpulsstabilisator ausgebildet und vorzugsweise mit einem Modul zur forcierten Einschaltung der Speisung des Arbeitselementes des Spiegels versehen.

## Beschreibung

### Technikbereich

Die Erfindung bezieht sich auf Bauelemente elektrooptischer Wandler, insbesondere auf Vorrichtungen zur automatischen Steuerung eines elektrochromen Autowagen-Rückblickspiegels.

### Vorbekannter Technikstand

Bekannt sind Elektronenschaltungen zur Steuerung eines elektrochromen Autowagen-Rückblickspiegels, enthaltend lichtempfindliche Elemente, eine Vergleichsschaltung, einen Verstärker und ein Speisemodul (s. USA-Patentschrift Nr. 4917477). Das Speisemodul in solchen Schaltungen ist ein Stromkreis mit einem starken Dämpfungswiderstand und einem Transistorschlüssel. Da die an das Arbeitselement des Spiegels angelegte Spannung weniger als 10% des Spannungspegels des Autowagen-Eigenstromkreises beträgt, zerstreut sich ein Grossteil der von dem Stromschema aufgenommenen Leistung als Wärme an den Elementen des Stromkreises. Bei einer Einschaltung kommt ein fixierter Spannungspegel an das Arbeitselement des Spiegels, was einer bestimmten Verdunkelungszeit entspricht.

### Offenbarung der Erfindung

Der Erfindung liegt die Aufgabe zugrunde, eine Vorrichtung zur automatischen Steuerung eines elektrochromen Autowagen-Rückblickspiegels mit relativ verminderter Leistungsaufnahme zu schaffen und dadurch eine kürzere Verdunkelungszeit des Spiegels zu erzielen.

Die gestellte Aufgabe wird dadurch gelöst, dass in der Elekronikschaltung zur automatischen Steuerung des elecktrochromen Rückblickspiegels, welche Bildempfänger, eine Vergleichsschaltung, einen Verstärker und ein Speisemodul enthält, das letztere als ein Impuls-Spannungsstabilisator gestaltet ist. Dabei kann das Speisemodul zusätzlich ein Modul zur forcierten Einschaltung der Speisung des Arbeitselementes enthalten.

Ein Vorteil der vorgeschlagenen Erfindung besteht darin, dass das Speisemodul, ausgebildet als ein Impuls-Spannungsstabilisator für die Speisung des Arbeitselementes des Spiegels, einen viel grösseren Wirkungsgrad (80%) gegenüber dem Prototyp (10%) aufweist. Dabei sichert die obenerwähnte Gestaltung des Speisemoduls in Verbindung mit dem Modul zur forcierten Einschaltung der Speisung des Spiegelarbeitselementes die anfängliche Zuleitung einer erhöhten Amplitude des Spannungsimpulses.

### Erläuterung der Zeichnungen

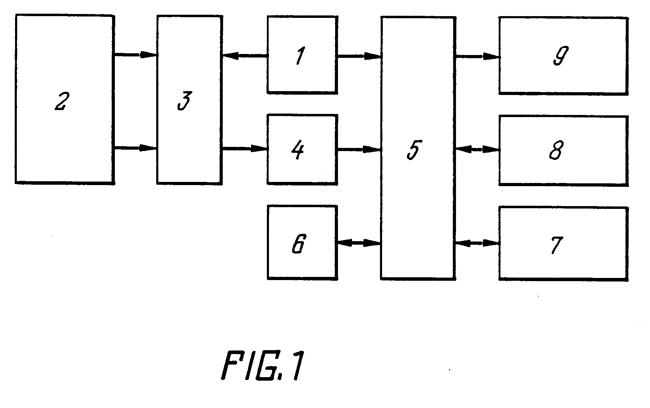

Fig. 1: Schaltungsschema des Elektronenblocks zur automatischen Steuerung eines elektrochromen Autowagen-Rückblickspiegels.

Fig. 2: Prinzipschaltung des Elektronenblocks.

Fig. 3: Diagramm der Abhängigkeit der Spannung am Spiegelarbeitselement in der Prototypschaltung (I) und in der vorgeschlegenen Schaltung (II).

### Beschreibung der Vorrichtung in Statik

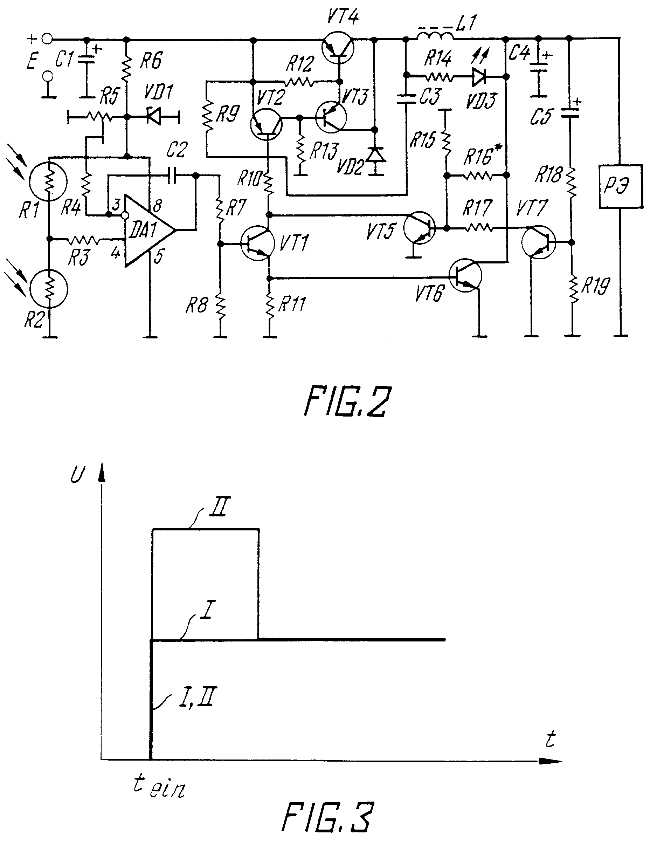

Die vorgeschlagene Elektronikschaltung zur automatischen Steuerung eines elektrochromen Autowagen-Rückblickspiegels enthält eine Kraftquelle 1, ein System von Bildempfängern 2, eine Vergleichsschaltung 3, einen Verstärker 4, ein Speisemodul 5 mit einem Modul zur forcierten Einschaltung 6, ein Abschaltungsmodul 7, einen Einschaltungsanzeiger 8 und ein Arbeitselement 9. Die Kraftquelle 1 weist eine Blockungseingangskapazität C1 (Fig. 2) auf, die die Aussenstromkreise vor einem Eindringen von Impulsstörungen aus dem Stromerzeuger des Speisemoduls schützt, sowie des Parameterstabilisators R6, VD1.

Das System der Bildempfänger enthält zwei empfindliche Elemente R1 und R2, von denen Element R2 als Arbeitselement funktioniert.

Die Vergleichsschaltung 3 enthält einen Ausgleichwiderstand R4 und einen Operationsverstärker DA1. Die Vergleichsschaltung ist an ihrem Eingang mit den Bildempfängern 2 und am Ausgang mit dem Speisemodul 5 über einen Verstärker 4 (R7, R8, VT1)verbunden.

Das Speisemodul 5 enthält einen Impulsgenerator, bestehend aus einem Schlüsselelement(VT3, VT4), einem Verstärker (VT2) und einem Mitkopplungskreis (C3, R9), ferner einen Gegenkopplungskreis(R15, R16, VT5), welcher eine Folgeregelung des Arbeitsspannungspegels des elektrochromen Elementes gewährleistet. Das Speisemodul 5 funktioniert als ein Spannungsschlüsselstabilisator des Serientyps und wandelt die Bordnetzspannung des Autowagens in eine Arbeitsspannung des elektrochromen Elementes um.

Das Speisemodul 5 enthält ebenfalls ein Modul zur forcierten Einschaltung 6, bestehend aus einem zeitvorgebenden Stromkreis(C5, R18)und ein Schlüsselelement zur Änderung der Arbeitsspannung (VT7). Dieses Schlüsselelement wird an den unteren Teilerarm des Gegenkopplungskreises(R15, R16, VT5) des Schlüsselstabilisators des Speisemoduls 5 angeschlossen.

Der Einschaltungsanzeiger 8 (R14, VD3) ist an das Speisemodul 5 angeschlossen und funktioniert von der Impulsspannung, die von der Induktivität(L1)abgenommen wird. Somit strahlt die Lichtdiode(VD3)nur während des Funktionierens des Schlüsselstabilisators des Speisemoduls.

### Funktionsweise der Vorrichtung

Die Elektronikschaltung zur automatischen Steuerung eines elektrochromen Autowagen-Rückblickspiegels funktioniert wie folgt. Bei Beleuchtung des empfindlichen Elementes(R2)des Bildempfängersystems 2 nehmen sein Widerstand und seine Spannung ab. Beim Erreichen des Schwellwertes ändert sich die Spannung am Ausgang des Operationsverstärkers (DA 1)der Vergleichschaltung 3 von einem hohen auf einen niedrigen Wert. Dabei schaltet der Verstärker 4 den Stromkreis der Mitkopplung(C3, R9)des Impulsgenerators des Speisemoduls 5 in Funktion ein. Das Speisemodul 5 funktioniert als ein Schlüsselstabilisator des Serientyps mit dem Schlüsselelement(VT4)und der Induktivität(L1). Die Stabilisierungsspannung wird durch den Widerstand (R16) vorgegeben. Das Speisemodul 5 kann das Modul zur forcierten Einschaltung 6 (R17, R18, R19, C5, VT7) enthalten. Dieses Modul funktioniert wie folgt. Bei Entstehung einer Spannung am Stabilisatorausgang öffnet sich der Transistor (VT7), der für die Zeit der Aufladung der Kapazität(C5) die Stabilisierungsspannung auf das 2fache vergrössert (Fig. 3), und zwar durch die parallele Einschaltung des Widerstandes(R17)an den Teilerunterarm(R15, R16).Nach erfolgter Aufladung der Kapazität C5 schliesst sich der Transistor (VT7) und am Stabilisatorausgang baut sich eine Arbeitsspannung auf.

Bei einer Verminderung der Intensität des blendenden Lichtstromes auf einen Schwellwert oder bei dessen vollständigem Schwund entsteht ein hoher Spannungspegel am Ausgang des Operationsteilers(DA1)der Vergleichsschaltung 3 und es öffnen sich die Transistoren(VT1)des Verstärkers und(VT6)des Moduls 7. Der geöffnete Transistor(VT1)überbrückt den Mitkopplungsstromkreis des Speisemodulgenerators und schaltet diesen aus, während der Transistor(VT6) das Arbeitselement 9 des Spiegels überbrückt und dessen Aufhellen bedingt. Das Arbeitselement 9 des Spiegels besteht aus elektrochromen Material. Beim Einsatz solch eines Arbeitselementes des elektrochromen Spiegels, das einen etwa 100 mA starken Strom bei 1V Spannung verbraucht, beträgt der Stromverbrauch des Speisemoduls rund 20 mA bei einer Speisespannung von 12 V. Die Leistungsaufnahme beträgt höchstens 0.25 W. Die Speisemodulschaltung des Prototypspeisemoduls beim Einsatz eines Arbeitselementes mit denselben Parametern verbraucht etwa 1,2 W. Somit beträgt die Leistungsaufnahme des vorgeschlagenen Speisemoduls ungefähr 5mal weniger als die entsprechende Leistung des Prototyps.

Bei der Zufuhr eines fixierten Spannungspegels 1 V an das Arbeitselement des Spiegels lässt sich ein vollständiges Abdunkeln der Oberfläche mit einem Absorptionskoeffizient nach 6 bis 7 Sekunden erzielen. Bei Verwendung eines Moduls der forcierten Einschaltung vermindert sich die Abdunkelungszeit um das 2- bis 3fache(s. Tabelle).

**Tabelle**

| Zeit eines vollständigen Abdunkeln des Arbeitselementes des Spiegels mit einem Absorptionskoeffizient 6 bei forcierten Einschaltung | | | |
|---|---|---|---|
| Amplitude des forcierenden Impulses, V | Dauer das forcierenden Impulses, Sek. | Grösse der den Verdunkelungspegel bestimmenden Spannung, V | Verdunkelungszeit, Sek. |
| 2,0 | 0,3 | 1,0 | 4 |
| 2,0 | 0,5 | 1,0 | 3 |
| 2,5 | 0,3 | 1,0 | 3 |
| 2,5 | 0,5 | 1,0 | 2 |

Somit ermöglicht es die vorgeschlagene Schaltung des Elektronikblocks zur automatischen Steuerung eines elektrochromen Autowagen-Rückblickspiegels, die Leistungsaufnahme auf 20% verglichen mit der vorbekannten technischen Lösung zu vermindern und dadurch die Abmessungs- und Wärmeparameter des Blocks zu verbessern. Darüber hinaus erlaubt es das Modul einer forcierten Einschaltung, die Abdunkelungszeit des Spiegels um das 2- bis 3fache zu vermindern.

Der vorgeschlagene Block zur Steuerung eines elektrochromen Spiegels ermöglicht nicht nur einen verminderten Energieverbrauch, sondern macht den Spiegel viel schnellwirkender.

## Patentansprüche

1. Elektronikschaltung zur automatischen Steuerung eines elektrochromen Autowagen-Rückblickspiegels, enthaltend ein System von Bildempfängern, eine Vergleichsschaltung,einen Verstärker und ein Speisemodul, **dadurch gekennzeichnet,** dass das Speisemodul alsein Spannungsimpulsstabilisator ausgebildet ist.

2. Elektronikschaltung nach Anspruch 1, **dadurch gekennzeichnet,** dass das Speisemodul mit einem Modul zur forcierten Einschaltung der Speisung des Arbeitselementes des Spiegels versehen ist.
